# EUROPEAN PATENT APPLICATION

(11) **EP 2 325 151 A1**
(43) Date of publication of application: **25.05.2011**
(21) Application number: 09460050.9
(22) Date of filing: 16.11.2009
(51) Int. Cl.: C04B 35/581, C04B 35/583, C08K 3/36, C08K 3/38, H01B 1/20, H05K 7/20

(54) **An insulating composite material with a polymer matrix**

(71) Applicant: ABB Research Ltd., 8050 Zürich (CH)
(72) Inventor: Michalik, Adam, 32-087 Bibice (PL); Kmita, Grzegorz, 41-200 Sosnowiec (PL); Kazmierczak, Tomasz, 94-019 Lodz (PL); Sekula, Robert, 30-613 Krakow (PL)
(74) Representative: Chochorowska-Winiarska, Krystyna

(57) **Abstract**

The invention deals with an insulating composite material with a polymer matrix applicable as insulating material for electric power equipment, and especially for medium and high voltage equipment. The insulating composite material with the polymer matrix according to the invention comprises a polymer matrix (1) in which particles of a dielectric material of grain size larger then 1µm are distributed in a dispersive way. The dielectric material particles constitute a filler (2) and have the form of grains (2a) and/or fibers (2b), of which each is substantially completely covered with a coating (3) of aluminum nitride or boron nitride.

## Description

The invention deals with an insulating composite material with a polymer matrix, applicable as an insulating material for electric power equipment, and especially for medium and high voltage equipment.

Polymer materials are commonly used in electric power equipment due to their very good dielectric properties and high mechanical strength. In order to achieve both these properties at the same time, composites are made by adding non-metallic and/or metallic fillers in the form of powders or fibers to polymer matrix. The most frequently used non-metallic fillers include silica or porcelain flour, chalk, talc, kaolin, aluminum oxide, graphite. Copper or aluminum powders or fibers are most usually used as metallic fillers. A filler additive allows not only to increasing the mechanical strength and the electric resistance of the composite, but it also has a beneficial effect on the durability of the composite and reduces the exothermic effect in chemosetting materials. Besides, the addition of fillers reduces internal stresses in the composite material, reduces thermal expansion and improves the thermal conductivity of the composite.

In polymer composites used to produce electric power insulation, the thermal conductivity of the most commonly used mineral fillers and polymer matrixes is low, which makes it very difficult to evacuate heat in the manufacturing process of electric equipment and also during its operation under electrical load. This often leads to insulation overheating.

Known polymer composites of increased thermal conductivity, containing metallic fillers, do not find application as the insulation of medium and high voltage apparatus due to insufficient insulating properties.

A polymer composite material for electronic applications, containing a polymer matrix and a filler in the form of metallic particles distributed in the matrix is know from US patent description No. 6822018. The metallic particles can be copper, aluminum or silver. This gives a polymer composite of high thermal conductivity. In order to isolate the metallic particles from one another, they are coated with a dielectric material characterized by. high thermal conductivity as compared to the thermal conductivity of the matrix.

In another variety of the invention, in addition to metal particles, the polymer matrix contains dielectric particles characterized by high thermal conductivity as compared to the thermal conductivity of the matrix. Addition of a small amount of dielectric particles to the matrix improves the thermal conductivity of the composite but does not change its properties to a degree permitting the use of the composite as insulation in electric power applications. As different from metallic particles, dielectric particles do not have any coating on their surface.

A disadvantage of this solution is that no metallic particles are allowed in the polymer matrix in electric power equipment because the whole insulating material must be strongly dielectric. Therefore the presented solution cannot be used in products operating under high voltage, and its use is limited to low voltage applications.

The inventive insulating composite material with a polymer matrix applicable as the insulation of electric power equipment, comprising a polymer matrix in which dielectric material particles of grain size exceeding 1 µm are embedded in a dispersive manner, is characterized in that the dielectric material particles constitute a composite filler and have the form of grains and/or fibers, each of which is substantially completely covered with a coating of aluminum nitride or boron nitride.

Preferably the thickness of the coating on the filler particles is not larger than the diameter of the filler grains or fibers.

Preferably the diameter of the filler of the grains or the fibers is in the range of 1 to 300µm.

Preferably the proportion of the filler covered with the coating ranges from 10 to 90% by weight of the composite.

Preferably the grains or the fibers of the filler are of a mineral or polymer material.

Preferably silica flour or corundum flour is used as the filler.

Alternatively a mixture of silica flour and corundum flour in any proportion is used as the filler.

Alternatively glass fibers are used as the filler.

Alternatively a mixture of silica flour and glass fibers in any proportion is used as the filler.

Alternatively a mixture of corundum flour and glass fibers in any proportion is used as the filler.

Alternatively a mixture of silica and corundum flour and glass fibers in any proportion is used as the filler.

Alternatively the grains or fibers of the filler are a polymer material whose thermal conductivity is less than 2 W/mK.

A method for the production of composite material with a polymer matrix according to claims 1 to 13 characterized in that the filler particles are covered with aluminum nitride or boron nitride using known methods. Next, coated filler particles are added at a proportion of 10 to 90 % by weight to the polymer matrix material which is in liquid phase and then mixed to obtain a dispersive distribution of the filler in the polymer matrix, after which the obtained product is solidified.

Use of a composite material with a polymer matrix according to claims 1-13 in electric power equipment for insulating medium and high voltage electric device.

The advantage of the insulating composite material with a polymer matrix according to the invention is its insulating properties, especially useful for applications in strong electric fields, with increased thermal conductivity compared to known insulating materials used in the electric power industry. The increase in thermal conductivity of the insulating composite with a polymer matrix allows to evacuate heat faster, both in the manufacturing process, for instance during the reactive molding of resins or during the injection of thermoplastics, and during the normal operation of equipment containing an insulating composite material with the polymer matrix. Electric power equipment or electric products equipped with an insulating composite material with a polymer matrix featuring improved thermal parameters can be made as equipment or products of smaller dimensions. An additional advantageous feature of electric insulation made of the inventive material is that the process of manufacturing electrotechnical products using this insulation does not require any changes, because all stages of the process remain the same and the only change is in the morphology of one of the components of the insulating composite material with a polymer matrix, i.e. the filler.

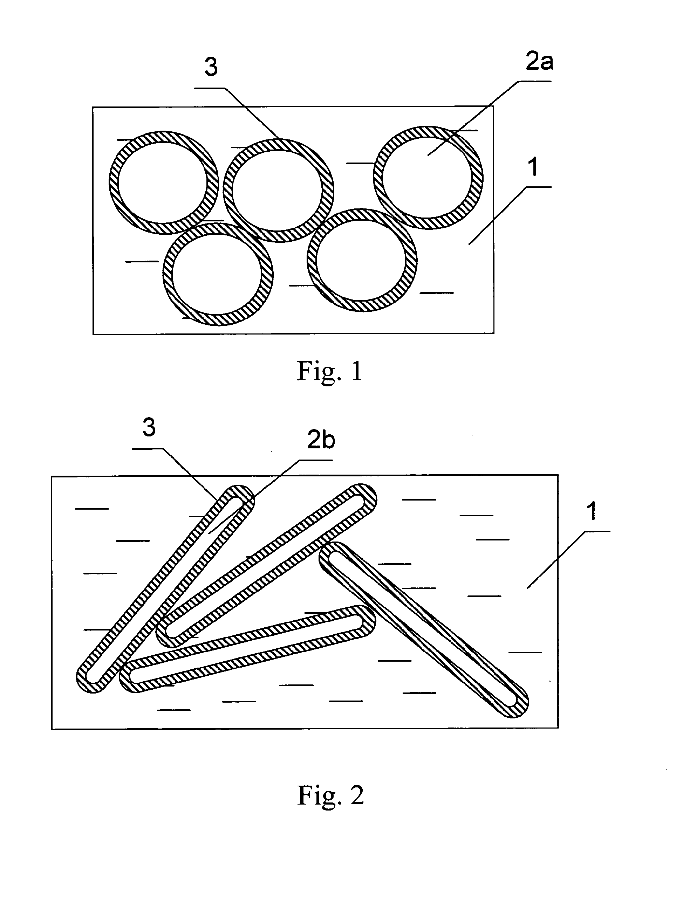

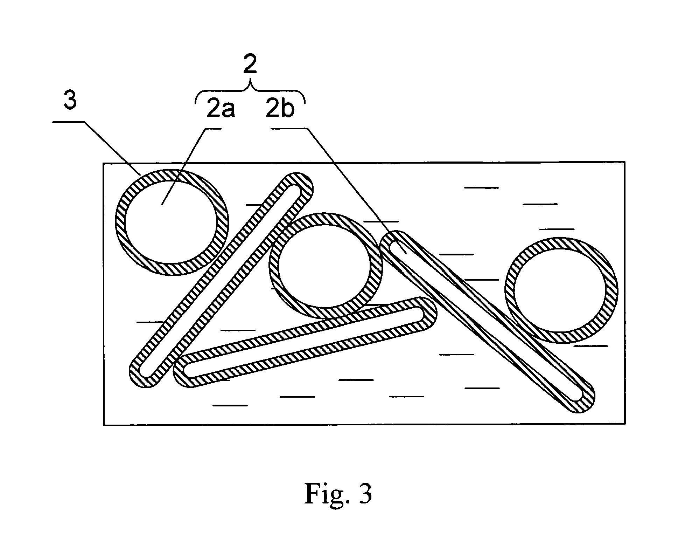

The inventive solution is schematically presented as an embodiment in the drawing where fig. 1 shows the structure of the insulating polymer composite material with the filler in the form of grains coated with a dielectric material, fig. 2 shows the structure of the insulating polymer composite material with the filler in the form of fibers coated with a dielectric material, fig. 3 - shows the structure of the insulating polymer composite material with the filler in the form of a mixture of grains and fibers coated with a dielectric material.

The insulating polymer composite material in the first embodiment of the invention contains a polymer matrix 1, by polymer matrix being meant a polymer with additives such as plasticizers, colorants, hardeners and other specified by the producer as necessary to obtain the properties mentioned in the material data sheet of the polymer. As the polymer are used chemosetting or thermosetting polymers, polymers selected from the group of thermoplastic or photosetting polymers, or radiation-hardened polymers. The matrix 1 contains a filler 2 of a mineral material distributed in it in a dispersive way, in the form of grains 2a of corundum flour AI₂O₃ , silica flour SiO₂, a polymer material separately or in a mutual mixture in any proportion, which are covered with a coating 3 of aluminum nitride AIN or boron nitride BN. If a mixture is used, the total proportion of all components of the mixture is in the range of 10 to 90 % by weight of total composite. In practical conditions, the coating covers substantially the whole grains of the filler, which means that there can be spots not covered by the coating but the number of such spots and their sizes do not affect the properties of the grains 2a. The thermal conductivity of the coating 3 is larger than the thermal conductivity of the grains 2a and larger than the thermal conductivity of the matrix 1 and it is within the range of 70 to 900 W/mK.

In the second embodiment of the invention, the material of the matrix 1 identical with the one in the first embodiment contains a filler 2 of a mineral material distributed in the matrix in a dispersive way in the form of fibers 2b of corundum flour Al₂O₃, silica flour SiO₂, glass fibers, fibers of a polymer material separately or in a mutual mixture in any proportion, which are covered with a coating 3 of aluminum nitride AIN or boron nitride BN. If a mixture is used, the total proportion of all components of the mixture is in the range of 10 to 90 % by weight of total composite. In practical conditions, the coating covers substantially the whole fibers 2b of the filler, which means that there can be spots not covered with the coating but the number of such spots and their sizes do not affect the properties of the fibers 2b . The thermal conductivity of the coating 3 is larger than the thermal conductivity of the fibers 2b and larger than the thermal conductivity of the matrix 1 and it is within the range of 70 to 900 W/mK.

In the third embodiment of the invention, the material of the matrix 1 identical with the one in the first and second embodiments contains a filler 2 made of grains 2a of corundum flour A1₂O₃, silica flour SiO₂, a polymer material separately or in a mutual mixture in any proportion, and fibers 2b of corundum flour A1₂O₃, silica flour SiO₂, glass fibers, fibers of a polymer material separately or in a mutual mixture in any proportion, which are covered with a coating 3 of aluminum nitride AIN or boron nitride BN. If a mixture is used, the total proportion of all components of the mixture is in the range of 10 to 90 % by weight of total composite. In practical conditions, the coating covers substantially the whole grains and fibers of the filler. The thermal conductivity of the coating 3 is larger than the thermal conductivity of the grains 2a and fibers 2b and larger than the thermal conductivity of the matrix 1, and it is within the range of 70 to 900 W/mK.

In all embodiments of the invention, materials of the group of chemosetting, thermosetting or thermoplastic, photosetting or radiation-hardened polymers of thermal conductivity in the range of up to 2 W/mK are used as the matrix material. As the filler 2 is used silica flour SiO₂, corundum flour Al₂O₃, glass fibers separately or in a mixture in any proportion, where the grains and/or fibers are covered with the coating 3. Grains or fibers of a polymer material whose thermal conductivity is less than 2 W/mK and whose particles are covered with the coating 3 can be used as the filler 2. In such case, any matrix polymer whose particles are covered with coating 3 can be used as the filler 2. As the material of the coating 3 on the grains and/or fibers of the filler 2, aluminum nitride AIN or boron nitride BN are used alternatively. In all these embodiments of the inventive composite the thickness of the coating 3 on the filler particles is not larger than the diameter of the grains 2a or fibers 2b of the filler, while the diameter of the filler grains or fibers is larger than 1 µm. Preferably, this diameter is within 1 to 300µm.

In the examples of the embodiment of the invention, the proportion of the filler 2 coated with the dielectric 3 is between 10 and 90 % by weight of composite, while the amount of the polymer matrix 1 ranges from 10 to 90 % by weight of composite. Preferably the amount of the filler 2 coated with the dielectric 3 ranges from 55 to 75 % by weight of composite, while the amount of the polymer matrix 1 ranges from 25 to 45 % by weight of composite.

An example of a method of the composite material production consists in covering the filler particles in the form of grains and/or fibers with a coating of aluminum nitride or boron nitride using known methods. Then the coated particles of the filler are added to the polymer matrix material being in liquid phase and mixed to obtain a dispersive distribution of the filler in the polymer matrix, after which the obtained product is solidified. The coating 3 on the filler 2 is obtained using the techniques of physical deposition of the layers from the gaseous phase using the magnetron sputtering technology or using the hydride method, or the method of synthesis from solution of nitrogen in gallium, or the method of synthesis in the presence of supercritical ammonia and the sublimation-recondensation method.

For example, if the aluminum nitride coating is used, the method of physical deposition of the layers from the gaseous phase using the magnetron sputtering technology is used. The aluminum nitride coating is deposited on the surface of the filler particles by the synthesis of aluminum in solid form and of nitrogen which is the reactive gas in the sputtering apparatus. The whole process occurs at a suitably low pressure of 0.4 MPa, and additionally argon is used as a working gas. The filler particles placed in a reactor are growth centers for the crystals of aluminum nitride. In order to completely cover the grains with a coating of dielectric material it is necessary to enforce their movement during the coating process, for instance by shaking. Besides the method of the physical deposition of the layers from the gaseous phase using the magnetron sputtering technology, for producing the insulating composite with a polymer matrix, containing a dielectric coating of aluminum nitride or boron nitride on the filler, the known hydride method, the method of synthesis from solution of nitrogen in gallium, or the method of synthesis in the presence of supercritical ammonia and the sublimation-recondensation method, or a combination of these methods is used.

The inventive composite material is explained by an example of an embodiment using a model sample of the insulating composite material which is epoxy resin formulation made by Huntsman in which the matrix is epoxy resin CY228 with hardener HY918, and with plasticizer DY045 and accelerator DY062, and the filler is silica flour.

The following composition was used to constitutethe experimental sample:
epoxy resin CY228 - 16.93 % by weight
hardener HY918 - 14.39% by weight
plasticizer DY045 - 3.39% by weight
accelerator DY062 - 0.14% by weight
silica flour as the filler - 65.17% by weight.

According to the manufacturer's material data sheet, the thermal conductivity of such mixture is 1 W/mK. For the resin casting model the heat transfer through the sample was calculated using the commercial program for heat exchange and fluid mechanics ANSYS Fluent. The calculations gave the value of the thermal conductivity for the resin sample with the filler in the form of silica flour equal to 0.93 W/mK.

In the second model, the same resin and hardener were used as the matrix, whereas silica flour particles whose surface was covered with a 2µm thick coating of aluminum nitride were used as the filler. A numerical analysis of heat flow was conducted for a material of the following composition:
epoxy resin CY228 - 16.93% by weight
hardener HY918 - 14.39% by weight
plasticizer DY045 - 3.39% czesci by weight
accelerator DY062 - 0.14% by weight
silica flour coated with aluminum nitride - 65.17% by weight

The conducted numerical analysis of heat transfer through such material showed that the thermal conductivity of the resin sample with the filler in the form of silica flour coated with aluminum nitride was 3.3 W/mK.

Thus the effect of increased thermal conductivity of an insulating composite with a polymer matrix containing a filler whose particles are covered with a dielectric material has been confirmed. The insulating composite of increased thermal conductivity is applicable as an insulating material in electric power equipment, and especially in medium or high voltage equipment. The housings of such equipment as well as insulating elements protecting against undesirable current conduction made of the inventive composite feature both high dielectric resistance and high thermal conductivity.

## Claims

1. An insulating composite material with a polymer matrix useful for insulating electric power equipment, comprising a polymer matrix (1) in which particles of dielectric material of grain size larger than 1 µm are embedded in a dispersive way, **characterized in that** the particles of the dielectric material constitute a composite filler (2) and have the form of grains (2a) and/or fibers (2b), each of which is substantially completely covered with a coating (3) of aluminum nitride or boron nitride.

2. A composite material according to claim 1, **characterized in that** the thickness of the coating (3) on the filler (2) particles is not larger than the diameter of the filler (2) grains (2a) or fibers (2b).

3. A composite material according to claims 1-2, **characterized in that** the diameter of the filler (2) grains (2a) or fibers (2b) is in the range of 1 to 300µm.

4. A composite material according to claims 1-3, **characterized in that** the proportion of the filler (2) covered with the coating (3) ranges from 10 to 90% by weight of the composite.

5. A composite material according to claims 1-4, **characterized in that** the grains (2a) or the fibers (2b) of the filler (2) are of a mineral or polymer material.

6. A composite material according to claim 5, **characterized in that** silica flour or corundum flour is used as the filler (2).

7. A composite material according to claim 5, **characterized in that** a mixture of silica flour and corundum flour in any proportion is used as the filler (2).

8. A composite material according to claim 5, **characterized in that** glass fibers are used as the filler (2).

9. A composite material according to claim 5, **characterized in that** a mixture of silica flour and glass fibers in any proportion is used as the filler (2).

10. A composite material according to claim 5, **characterized in that** a mixture of corundum flour and glass fibers in any proportion is used as the filler (2).

11. A composite material according to claim 5, **characterized in that** a mixture of silica and corundum flour and glass fibers in any proportion is used as the filler (2).

12. A composite material according to claim 5, **characterized in that** the grains (2a) or fibers (2b) of the filler (2) are a polymer material whose thermal conductivity is less than 2 W/mK.

13. A method of production of the insulating composite material with the polymer matrix according to claims 1-13 **characterized in that** the filler (2) particles are covered with a cover (3) of aluminum nitride or boron nitride using known methods, then the coated filler particles are added at a quantity of 10 % to 90 % by weight to the material of the polymer matrix (1) which is in liquid phase and mixed to obtain a dispersive distribution of the filler in the polymer matrix (1), after which the obtained product is solidified.

14. Use of an insulating composite material with the polymer matrix according to claims 1-13 in electric power equipment for insulating medium and high voltage electric device.
